# EUROPEAN PATENT SPECIFICATION

(11) **EP 4 216 329 B1**
(45) Date of publication and mention of the grant of the patent: **15.07.2026**
(21) Application number: 22876866.9
(22) Date of filing: 28.09.2022
(51) Int. Cl.: H01M 10/04, H01M 10/0583, H01M 10/052, H01M 10/0525, H01M 10/0587

(54) **METHOD OF MANUFACTURING AN ELECTRODE ASSEMBLY AND MANUFACTURING APPARATUS THEREOF**
VERFAHREN ZUR HERSTELLUNG EINER ELEKTRODENANORDNUNG UND VORRICHTUNG ZUR HERSTELLUNG DAVON
PROCÉDÉ DE FABRICATION D'ENSEMBLE ÉLECTRODE ET APPAREIL DE FABRICATION CORRESPONDANT

(30) Priority: 29.09.2021 KR 20210128689
(43) Date of publication of application: 26.07.2023
(73) Proprietor: LG Energy Solution, Ltd., Seoul 07335 (KR)
(72) Inventor: SONG, Eunji, Daejeon 34122 (KR); PARK, Ki Beom, Daejeon 34122 (KR); SONG, Euiseob, Daejeon 34122 (KR); YEE, Minha, Daejeon 34122 (KR); LI, Zhenghua, Daejeon 34122 (KR); LEE, Hyojoon, Daejeon 34122 (KR)
(74) Representative: Plasseraud IP
(86) International application number: PCT/KR2022/014599
(87) International publication number: WO 2023/055094

(56) References cited:
- WO-A1-2019/239988
- KR-A- 20090 003 823
- KR-A- 20150 035 123
- KR-A- 20170 094 916
- KR-A- 20180 044 769
- KR-A- 20200 141 859
- KR-B1- 102 124 105

## Description

### [TECHNICAL FIELD]

### Cross Citation with Related Application(s)

This application claims the benefit of Korean Patent Application No. 10-2021-0128689 filed on September 29, 2021 with the Korean Intellectual Property Office.

The present disclosure relates to a method of manufacturing an electrode assembly and a manufacturing apparatus thereof.

### [BACKGROUND]

Due to the rapid increase in the use of fossil fuels, the demand for the use of alternative energy or clean energy is increasing, and as part thereof, the fields that are being studied most actively are the fields of power generation and power storage using electrochemistry.

At present, a secondary battery is a representative example of an electrochemical device that utilizes such electrochemical energy, and the range of use thereof tends to be gradually expanding.

In recent years, as mobile devices, such as portable computers, portable phones, and cameras, have been increasingly developed, the demand for secondary batteries has also sharply increased as an energy source for the mobile devices. Among such secondary batteries is a lithium secondary battery exhibiting a high energy density and a high voltage, a long cycle lifespan, and a low self-discharge rate, in which much research has been carried out and which is now commercialized and widely used.

In addition, as interest in environmental issues grows, studies are frequently conducted on an electric vehicle, a hybrid electric vehicle, etc. which can replace a vehicle using fossil fuels such as a gasoline vehicle and a diesel vehicle, which are one of the main causes of air pollution. Although a nickel metal hydride secondary battery is mainly used as a power source for the electric vehicle and the hybrid electric vehicle, research on the use of a lithium secondary battery having high energy density and discharge voltage is actively being conducted, a part of which are in the commercialization stage.

This lithium secondary battery has a structure in which an electrode assembly is built into a secondary battery case, and the electrode assembly is structurally classified into a jelly roll-type electrode assembly manufactured by winding a cathode sheet, an anode sheet, and a separation film, a stacked electrode assembly that stacks a unit cathode, a unit anode, and a separator, a stack/folding type electrode assembly that winds unit cells such as bi-cells, full-cells or mono-cell with a separator film, and a stacked/laminated type electrode assembly that laminates the unit cells.

At this time, during the folding process of winding the unit cells with a separation film, the stack/folding type electrode assembly has a problem that as the unit cell is mounted on the separation film and then simply wound, a non-bonded region between the folding surface and the unit cell is increased, the interfacial resistance in the non-bonded region is increased, and thus lithium is deposited.

Particularly, the electrode included in the unit cells has a flat portion in which the thickness of the active material layer is constant and an inclined portion whose thickness gradually decreases from both ends thereof, wherein the non-bonded region is more pronounced at the inclined portion.

Therefore, the lithium deposited therefrom threatens the safety of the secondary battery, which causes a problem that cycle characteristics are remarkably deteriorated.

Therefore, there is an urgent need to develop a technique for manufacturing an electrode assembly for a secondary battery that can solve these problems.
With respect to cells having a cathode and an anode located on both sides of a separation membrane having an end on one side of the cell, document KR 2017 0094916 A discloses to weld a part of the separation membrane in a transverse direction on a longitudinal separation film receiving several cells stacked in the longitudinal direction of the separation film prior to a winding process.

### [DETAILED DESCRIPTION OF THE INVENTION]

### [Technical Problem]

The present disclosure is designed to solve the above-mentioned problems, and an object of the present disclosure is to provide a method of manufacturing an electrode assembly and a manufacturing apparatus thereof that can suppress lithium deposition at both ends where the electrode assembly tabs are formed, thus improving the safety and cycle characteristics of a secondary battery

### [Technical Solution]

Terms or words used in the present specification and claims should not be construed as limited to ordinary or dictionary terms, and the present disclosure should be construed with meanings and concepts that are consistent with the technical idea of the present disclosure based on the principle that the inventors may appropriately define concepts of the terms to appropriately describe their own disclosure in the best way.

Hereinafter, according to one embodiment of the present disclosure, there is provided a method of manufacturing an electrode assembly in which unit cells are wound with a separation film, the method comprising the steps of:
(a) mounting unit cells on the upper surface of the separation film to prepare an array body;
(b) heat-treating one end of each of the unit cells where tabs of the unit cells are formed, another end of each of the unit cells, and the separation film positioned at a corresponding thereto, which are positioned in the upper and lower portions of a direction parallel to a longitudinal direction of the separation film and parallel to a winding direction of the array body in order to minimize non-bonded regions between the separation film and the unit cells; and
(c) winding the heat-treated unit cells with the separation film.

In step (a), the unit cells may be mounted on the upper surface of the separation film, so that the electrode tabs having the same polarity are located upward and downward at the same position after winding.

Further, the heat treatment of step (b) may be performed by heating or hot air, and the heat treatment of step (b) is performed at 50°C to 200°C.

When specifically considering the region where the heat treatment is performed, the electrode included in the unit cells has a flat portion where the thickness of the active material layer is constant and an inclined portion where the thickness of the active material layer decreases from both ends of the flat portion, and
one end and the other end where tabs of the unit cells are formed may include a region corresponding to the inclined portion.

According to the invention, the winding speed of step (c) is 5 rpm to 30 rpm.

The heat treatment in step (b) and the winding in step (c) may be performed continuously, and thus, the heat treatment time is affected by the winding speed.

Meanwhile, the electrode assembly may include a single-sided electrode in which an active material layer is formed only on the inner side of the electrode located at the outermost portion in a wound state.

Each of the unit cells may be a bi-cell, a full-cell, or a mono-cell.

According to another embodiment of the present disclosure, there is provided an apparatus of manufacturing an electrode assembly in which unit cells are wound with a separation film, the apparatus comprising:
a winder that winds an array body in which the unit cells are mounted on the upper surface of the separation film, and
heaters being configured for heat-treating one end of each of the unit cells where tabs of the unit cells are formed, another end of each of the unit cells, and the separation film positioned at a corresponding thereto, which are positioned in the upper and lower portions of a direction parallel to a longitudinal direction of the separation film and parallel to a winding direction of the array body.

Wherein, the heater may be of a heating type or a hot air type.

The heater may be formed in a portion wholly covered the unit cells which are mounted on the upper surface of the separation film.

The winder may be located on one side of the heater.

### [BRIEF DESCRIPTION OF THE DRAWINGS]

Fig. 1 is a schematic diagram of the electrode assembly manufacturing apparatus according to an embodiment of the present disclosure;
Fig. 2 is a schematic side view of the unit cell of the present disclosure; and
Fig. 3 is a schematic cross-sectional diagram of the electrode assembly of the present disclosure.

### [DETAILED DESCRIPTION OF THE EMBODIMENTS]

Hereinafter, preferred embodiments of the present disclosure will be described in detail with reference to the accompanying drawings.

The terms and words used in the present specification and claims should not be interpreted as being limited to typical meanings or dictionary definitions, but should be interpreted as having meanings and concepts relevant to the technical scope of the present disclosure based on the rule according to which an inventor can appropriately define the terms and words as terms for describing most appropriately the best method he or she knows for carrying out the invention.

According to one embodiment of the present disclosure, there is provided a method of manufacturing an electrode assembly in which unit cells are wound with a separation film, the method comprising the steps of:
(a) mounting unit cells on the upper surface of the separation film to prepare an array body;
(b) heat-treating one end of each of the unit cells where tabs of the unit cells are formed, another end of each of the unit cells, and the separation film positioned at a corresponding thereto, which are positioned in the upper and lower portions of a direction parallel to a longitudinal direction of the separation film and parallel to a winding direction of the array body; and
(c) winding the heat-treated unit cells with the separation film.

According to another embodiment of the present disclosure, there is provided an apparatus of manufacturing an electrode assembly in which unit cells are wound with a separation film, the apparatus comprising:
a winder that winds an array body in which the unit cells are mounted on the upper surface of the separation film, so that the electrode tabs having the same polarity are located upward and downward at the same position, after winding, and
heaters being configured for heat-treating one end of each of the unit cells where tabs of the unit cells are formed, another end of each of the unit cells, and the separation film positioned at a corresponding thereto, which are positioned in the upper and lower portions of a direction parallel to a longitudinal direction of the separation film and parallel to a winding direction of the array body.

Now, an electrode assembly manufacturing method and a manufacturing apparatus thereof according to the present disclosure will be described together based on the schematic diagram of the electrode assembly manufacturing apparatus.

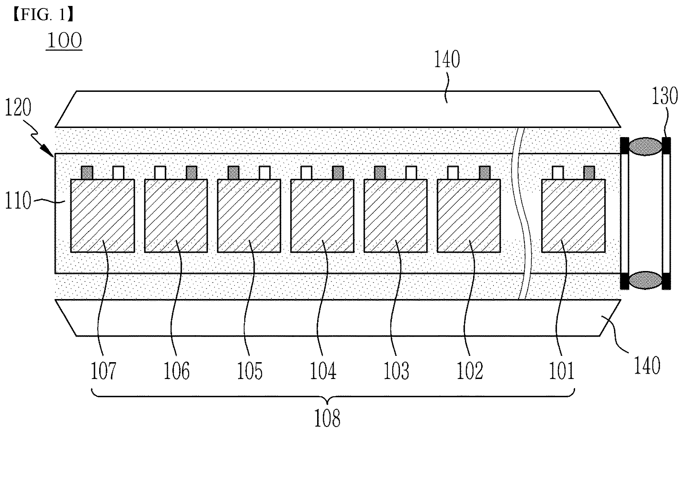

Specifically, Fig. 1 schematically shows an electrode manufacturing apparatus for a secondary battery according to an embodiment of the present disclosure.

Referring to Fig. 1, an electrode assembly manufacturing apparatus 100 for a secondary battery according to the present disclosure includes a winder 130 that winds an array body 120 in which unit cells 108: 101, 102, 103, 104, 105, 106 and 107 are mounted on the upper surface of a separation film 110, and heater 140 that are located at the upper and lower portions in the longitudinal direction of the separation film 110 parallel to the winding direction of the array body 120 and heat-treats one end and the other end where tabs of the unit cells are formed, and the separation film 110 corresponding thereto.

First, according to an embodiment of the present disclosure, the electrode assembly of the present disclosure is manufactured by arranging a plurality of unit cells 108 on the separation film 110 to prepare the array body 120.

At this time, the unit cells 108 are wound and then arranged so that the electrode tabs having the same polarity are located upward and downward at the same position.

Each of the unit cells 108 may be a bi-cell in which electrodes having the same polarity are located at both ends, a full-cell in which electrodes having different polarity are located at both ends, or a mono-cell including one electrode.

For example, the bi-cell may have a structure of anode/separator/cathode/separator/anode, the full-cell may have a structure of anode/separator/cathode, and the mono-cell may have a structure in which any one electrode of a cathode or an anode and a separator are stacked.

However, it is needless to say that the unit cells 108 are wound and then should be arranged so as to have a stacked structure in which cathode and anode are alternately arranged.

Meanwhile, the electrodes included in the unit cells 108 are configured such that an inclination is generated at one end and the other end where tabs are formed due to application of the electrode active material slurry during the manufacturing process of the electrode.

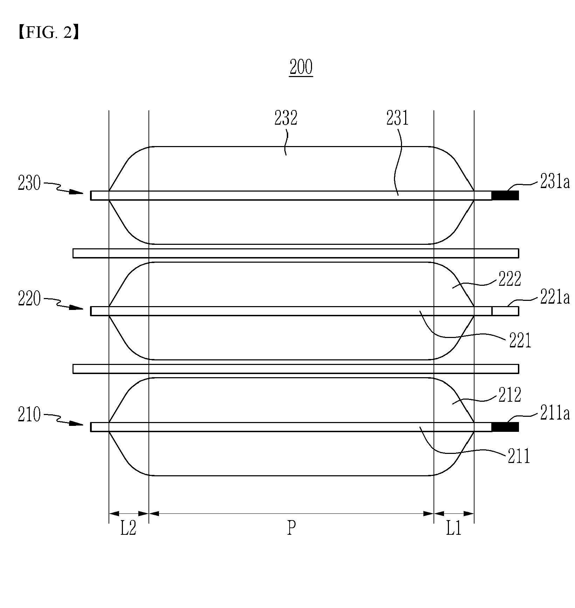

In order to specifically explain this, Fig. 2 schematically shows a side view of the unit cell of the present disclosure.

Referring to Fig. 2, the unit cell 200 is composed of a plurality of electrodes 210, 220 and 230. Fig. 2 shows a bi-cell consisting of three electrodes 210, 220 and 230, but is not so limited thereto.

The electrodes 210, 220 and 230 have a structure in which active material layers 212, 222 and 232 are formed on current collectors 211, 221 and 231, respectively, and electrode tabs 211a, 221a and 231a are formed on one side of the current collectors 211, 221 and 231, respectively.

Here, considering the active material layers 212, 222 and 232, the active material layers 212, 222 and 232 have a flat portion P where the thickness of active material layers 212, 222 and 232 are constant, and inclined portions L₁ and L₂ where the thickness of the active material layers 212, 222 and 232 decreases from both ends of the flat portion P. Specifically, the active material layer has an inclined portion L₁ on one end side of the tab in the direction in which the tab is formed and an inclined portion L₂ on the other end side corresponding thereto.

Thus, the active material layers of the electrodes 210, 220 and 230 forming the unit cell 200 have the inclined portions L₁ and L₂, so that when the unit cell 200 is wound with a separation film, the inclined portion L₁ of one end where a tab is formed and the inclined portion L₂ of the other end corresponding thereto are spaced apart from the separation film to generate a space and not bonded, and thus, the deposition of lithium often occurs in the region.

However, referring to Fig. 1 again, in the present disclosure, a process is performed in which the array body 120 in which the unit cells 108 are mounted on the separation film 110 is heat-treated together with one end and the other end in which the tabs are formed in the unit cells 108, and the separation film 110 corresponding thereto.

At this time, one end and the other end where tabs of the unit cells 108 subjected to heat treatment are formed may be regions including regions corresponding to the inclined portions of the electrodes.

The heat treatment is performed by heaters 140 located at the upper and lower portions in the longitudinal direction of the separation film 110, wherein the heat treatment may be performed by heating or hot air, and therefore, the heater 140 may be a heating type or hot air type device.

Moreover, the heat treatment is performed at 50°C to 200°C.

If the heat treatment is performed at too low a temperature outside the above range, the bonding effect intended by the present disclosure cannot be sufficiently obtained, and if the heat treatment is performed at too high a temperature, deformation of the active material layer and deformation of the separation film may be occurred, which is not preferable.

Meanwhile, after the heat treatment, the unit cells 108 are wound with the separation film 110.

At this time, the heat treatment time may be affected by the winding speed performed after the heat treatment.

Specifically, the winder 130 for winding the array body 120 may be located on one side of the heater 140, whereby the heat treatment of step (b) and the winding of step (c) may be performed continuously. Therefore, the heat treatment time can be affected by the winding speed.

At this time, the winding speed of step (c) is 5rpm to 30rpm.

If the winding speed is too fast outside the above range, a sufficient heat treatment effect cannot be obtained, and if the winding speed is too slow, overheating may occur, which is not preferable.

Further, the heater 140 for performing the heat treatment is not limited in size, and the unit cells 108 may be formed in a portion mounted on the upper surface of the separation film 110, so that the unit cells 108 can be sufficiently heat-treated.

Specifically, when the heat treatment is performed in this way, the heat treatment time of the unit cell may be 3 seconds to 20 seconds.

If the heat treatment time is outside the above range, a sufficient heat treatment effect cannot be obtained or, conversely, overheating may occur, which is not preferable.

Meanwhile, the electrode assembly manufactured in this way may be a single-sided electrode in which an active material layer is formed only on the inner side of the electrode located at the outermost portion in a wound state.

Therefore, the electrode facing the separation film 110 in the two unit cells 106 and 107 at the winding end point of Fig. 1 may be a single-sided electrode.

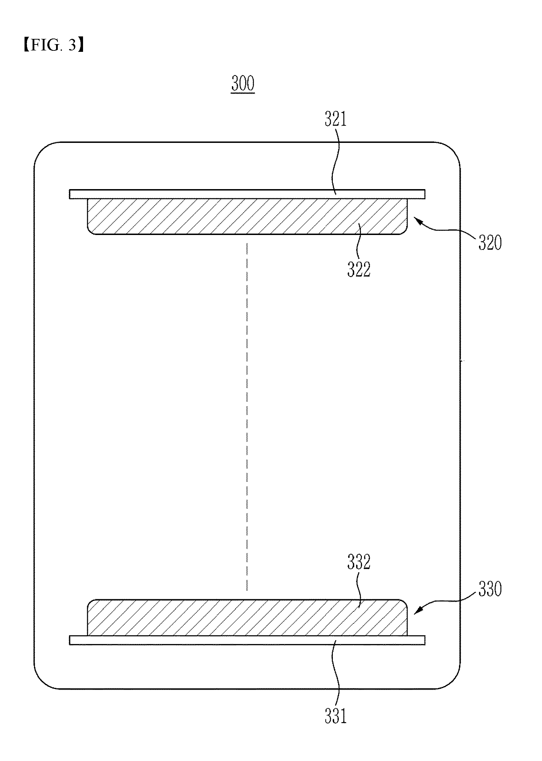

In order to explain this more clearly, a cross-sectional view of the electrode assembly in a wound state is shown in Fig. 3.

Referring to Fig. 3, the electrode assembly 300 has a structure in which unit cells are wound with a separation film 310. At this time, respective electrodes 320 and 330 included in the unit cells 106 and 107 present at the outermost portion is a single-sided electrode in which active material layers 322 and 332 are respectively formed only on the inner side of an electrode assembly 300 on current collectors 321 and 331.

Specifically, the electrode 320 located on the upper portions is formed with the active material layer 322 only on the lower surface of the current collector 321, and the electrode 330 located at the lower portion is formed with an active material layer 332 only on the upper surface of the current collector 331.

When the electrodes located at the outermost portion are single-sided electrodes, there is no waste of the active material layer, and the overall thickness of the electrode assembly is reduced, which is thus more preferable.

### [Description of Reference Numerals]

100: electrode assembly manufacturing apparatus
110: separation film
101, 102, 103, 104, 105, 106, 107: unit cell
120: array body
130: winder
140: heater
200: unit cell
300: electrode assembly.

### [Industrial Applicability]

According to the present disclosure, when one end formed with tabs that do not adhere well to the electrode assembly, and the other end corresponding thereto are heat-treated before winding in a state in which the unit cells are arranged on the separation film, a non-bonded region between the separation film and the unit cells can be minimized and thus, the deposition of lithium can be minimized, thereby improving the safety and cycle characteristics of a secondary battery including the same.

## Claims

1. A method of manufacturing an electrode assembly in which unit cells are wound with a separation film, the method comprising the steps of:
(a) mounting unit cells on the upper surface of the separation film to prepare an array body;
(b) heat-treating one end of each of the unit cells where tabs of the unit cells are formed, another end of each of the unit cells, and the separation film positioned at a corresponding thereto, which are positioned in the upper and lower portions of a direction parallel to a longitudinal direction of the separation film and parallel to a winding direction of the array body; and
(c) winding the heat-treated unit cells with the separation film,
wherein:
the heat treating of step (b) is performed at 50°C to 200°C and
wherein the winding speed of step (c) is 5 rpm to 30 rpm.

2. The method of manufacturing an electrode assembly according to claim 1 wherein:
in step (a), the unit cells are mounted on the upper surface of the separation film, so that the electrode tabs having the same polarity are located upward and downward at the same position after winding.

3. The method of manufacturing an electrode assembly according to claim 1 wherein:
the heat treating of step (b) is performed by heating or hot air.

4. The method of manufacturing an electrode assembly according to claim 1 wherein:
the electrode included in the unit cells has a flat portion where the thickness of the active material layer is constant and an inclined portion where the thickness of the active material layer decreases from both ends of the flat portion, and
one end and the other end where tabs of the unit cells are formed include a region corresponding to the inclined portion.

5. The method of manufacturing an electrode assembly according to claim 1 wherein:
the heat treating in step (b) and the winding in step (c) are performed continuously.

6. The method of manufacturing an electrode assembly according to claim 1 wherein:
the electrode assembly includes a single-sided electrode in which an active material layer is formed only on the inner side of the electrode located at the outermost portion in a wound state.

7. The method of manufacturing an electrode assembly according to claim 1 wherein:
each of the unit cells is a bi-cell, a full-cell, or a mono-cell.

8. An apparatus of manufacturing an electrode assembly in which unit cells are wound with a separation film according to the process of claim 1, the apparatus comprising:
a winder that winds an array body in which the unit cells are mounted on the upper surface of the separation film, and
heaters being configured for heat-treating one end of each of the unit cells where tabs of the unit cells are formed, another end of each of the unit cells, and the separation film positioned at a corresponding thereto, which are positioned in the upper and lower portions of a direction parallel to a longitudinal direction of the separation film and parallel to a winding direction of the array body.

9. The apparatus of manufacturing an electrode assembly according to claim 8 wherein:
the heater is of a heating type or a hot air type.

10. The apparatus of manufacturing an electrode assembly according to claim 8 wherein:
the heater is formed in a portion wholly covered the unit cells which are mounted on the upper surface of the separation film.

11. The apparatus of manufacturing an electrode assembly according to claim 8 wherein:
the winder is located on one side of the heater.

## Patentansprüche

1. Verfahren zur Herstellung einer Elektrodenanordnung, bei dem Einheitszellen mit einer Trennfolie gewickelt werden, wobei das Verfahren die folgenden Schritte umfasst:
(a) Montieren von Einheitszellen auf der oberen Oberfläche der Trennfolie, um einen Anordnungskörper herzustellen;
(b) Wärmebehandeln eines Endes jeder der Einheitszellen, an dem Laschen der Einheitszellen ausgebildet sind, eines anderen Endes jeder der Einheitszellen und der entsprechend dazu positionierten Trennfolie, die in den oberen und unteren Abschnitten einer Richtung parallel zu einer Längsrichtung der Trennfolie und parallel zu einer Wickelrichtung des Anordnungskörpers positioniert sind; und
(c) Wickeln der wärmebehandelten Einheitszellen mit der Trennfolie,
wobei:
das Wärmebehandeln von Schritt (b) bei 50 °C bis 200 °C durchgeführt wird und
wobei die Wickelgeschwindigkeit von Schritt (c) 5 U/min bis 30 U/min beträgt.

2. Verfahren zur Herstellung einer Elektrodenanordnung nach Anspruch 1, wobei:
in Schritt (a) die Einheitszellen auf der oberen Oberfläche der Trennfolie montiert werden, sodass die Elektrodenlaschen mit derselben Polarität nach dem Wickeln an derselben Position nach oben und nach unten angeordnet sind.

3. Verfahren zur Herstellung einer Elektrodenanordnung nach Anspruch 1, wobei:
das Wärmebehandeln von Schritt (b) durch Erhitzen oder Heißluft durchgeführt wird.

4. Verfahren zur Herstellung einer Elektrodenanordnung nach Anspruch 1, wobei:
die in den Einheitszellen enthaltene Elektrode einen flachen Abschnitt aufweist, in dem die Dicke der Aktivmaterialschicht konstant ist, und einen geneigten Abschnitt, in dem die Dicke der Aktivmaterialschicht von beiden Enden des flachen Abschnitts abnimmt, und
ein Ende und das andere Ende, an denen Laschen der Einheitszellen ausgebildet sind, einen Bereich enthalten, der dem geneigten Abschnitt entspricht.

5. Verfahren zur Herstellung einer Elektrodenanordnung nach Anspruch 1, wobei:
das Wärmebehandeln in Schritt (b) und das Wickeln in Schritt (c) kontinuierlich durchgeführt werden.

6. Verfahren zur Herstellung einer Elektrodenanordnung nach Anspruch 1, wobei:
die Elektrodenanordnung eine einseitige Elektrode enthält, bei der eine Aktivmaterialschicht nur auf der Innenseite der Elektrode ausgebildet ist, die sich im gewickelten Zustand am äußersten Abschnitt befindet.

7. Verfahren zur Herstellung einer Elektrodenanordnung nach Anspruch 1, wobei:
jede der Einheitszellen eine Bizelle, eine Vollzelle oder eine Monozelle ist.

8. Einrichtung zur Herstellung einer Elektrodenanordnung, bei der Einheitszellen mit einer Trennfolie nach dem Verfahren nach Anspruch 1 gewickelt werden, wobei die Einrichtung umfasst:
einen Wickler, der einen Anordnungskörper wickelt, in dem die Einheitszellen auf der oberen Oberfläche der Trennfolie montiert sind, und
Heizvorrichtungen, die konfiguriert sind zum Wärmebehandeln eines Endes jeder der Einheitszellen, an dem Laschen der Einheitszellen ausgebildet sind, eines anderen Endes jeder der Einheitszellen und der entsprechend dazu positionierten Trennfolie, die in den oberen und unteren Abschnitten einer Richtung parallel zu einer Längsrichtung der Trennfolie und parallel zu einer Wickelrichtung des Anordnungskörpers positioniert sind.

9. Einrichtung zur Herstellung einer Elektrodenanordnung nach Anspruch 8, wobei:
die Heizvorrichtung von einem Heiztyp oder einem Heißlufttyp ist.

10. Einrichtung zur Herstellung einer Elektrodenanordnung nach Anspruch 8, wobei:
die Heizvorrichtung in einem Abschnitt ausgebildet ist, der die Einheitszellen, die auf der oberen Oberfläche der Trennfolie montiert sind, vollständig bedeckt.

11. Einrichtung zur Herstellung einer Elektrodenanordnung nach Anspruch 8, wobei:
der Wickler auf einer Seite der Heizvorrichtung angeordnet ist.

## Revendications

1. Procédé de fabrication d'un ensemble d'électrodes dans lequel des cellules unitaires sont enroulées avec un film de séparation, le procédé comprenant les étapes consistant à :
(a) monter des cellules unitaires sur la surface supérieure du film de séparation pour préparer un corps de réseau ;
(b) traiter thermiquement une extrémité de chacune des cellules unitaires où des languettes des cellules unitaires sont formées, une autre extrémité de chacune des cellules unitaires, et le film de séparation positionné en correspondance avec celles-ci, qui sont positionnés dans les parties supérieure et inférieure d'une direction parallèle à une direction longitudinale du film de séparation et parallèle à une direction d'enroulement du corps de réseau ; et
(c) enrouler les cellules unitaires traitées thermiquement avec le film de séparation,
dans lequel :
le traitement thermique de l'étape (b) est effectué à une température de 50 °C à 200 °C et
dans lequel la vitesse d'enroulement de l'étape (c) est de 5 tr/min à 30 tr/min.

2. Procédé de fabrication d'un ensemble d'électrodes selon la revendication 1, dans lequel à l'étape (a), les cellules unitaires sont montées sur la surface supérieure du film de séparation, de sorte que les languettes d'électrode ayant la même polarité sont situées vers le haut et vers le bas à la même position après enroulement.

3. Procédé de fabrication d'un ensemble d'électrodes selon la revendication 1, dans lequel le traitement thermique de l'étape (b) est effectué par chauffage ou par air chaud.

4. Procédé de fabrication d'un ensemble d'électrodes selon la revendication 1, dans lequel :
l'électrode incluse dans les cellules unitaires a une partie plate où l'épaisseur de la couche de matériau actif est constante et une partie inclinée où l'épaisseur de la couche de matériau actif diminue à partir des deux extrémités de la partie plate, et
une extrémité et l'autre extrémité où les languettes des cellules unitaires sont formées comprennent une région correspondant à la partie inclinée.

5. Procédé de fabrication d'un ensemble d'électrodes selon la revendication 1, dans lequel le traitement thermique à l'étape (b) et l'enroulement à l'étape (c) sont effectués en continu.

6. Procédé de fabrication d'un ensemble d'électrodes selon la revendication 1, dans lequel l'ensemble d'électrodes comprend une électrode simple face dans laquelle une couche de matériau actif est formée uniquement sur le côté intérieur de l'électrode située à la partie la plus externe dans un état enroulé.

7. Procédé de fabrication d'un ensemble d'électrodes selon la revendication 1, dans lequel chacune des cellules unitaires est une bi-cellule, une cellule complète ou une mono-cellule.

8. Appareil de fabrication d'un ensemble d'électrodes dans lequel des cellules unitaires sont enroulées avec un film de séparation selon le procédé de la revendication 1, l'appareil comprenant :
un enrouleur qui enroule un corps de réseau dans lequel les cellules unitaires sont montées sur la surface supérieure du film de séparation, et
des dispositifs de chauffage configurés pour traiter thermiquement une extrémité de chacune des cellules unitaires où des languettes des cellules unitaires sont formées, une autre extrémité de chacune des cellules unitaires, et le film de séparation positionné en correspondance avec celles-ci, qui sont positionnés dans les parties supérieure et inférieure d'une direction parallèle à une direction longitudinale du film de séparation et parallèle à une direction d'enroulement du corps de réseau.

9. Appareil de fabrication d'un ensemble d'électrodes selon la revendication 8, dans lequel le dispositif de chauffage est d'un type à chauffage ou d'un type à air chaud.

10. Appareil de fabrication d'un ensemble d'électrodes selon la revendication 8, dans lequel le dispositif de chauffage est formé dans une partie recouvrant entièrement les cellules unitaires qui sont montées sur la surface supérieure du film de séparation.

11. Appareil de fabrication d'un ensemble d'électrodes selon la revendication 8, dans lequel l'enrouleur est situé sur un côté du dispositif de chauffage.
